# EUROPEAN PATENT APPLICATION

(11) **EP 4 603 306 A1**
(43) Date of publication of application: **20.08.2025**
(21) Application number: 24157812.9
(22) Date of filing: 15.02.2024
(51) Int. Cl.: B60G 3/20, B62D 7/18

(54) **COMPONENT FOR A VEHICLE CHASSIS**

(71) Applicant: Volvo Car Corporation, 405 31 Göteborg (SE)
(72) Inventor: SKAGIUS, Adam, 40531 Göteborg (SE); NORDELL, Magnus, 40531 Göteborg (SE); WEGLIN, Joakim, 40531 Göteborg (SE)
(74) Representative: Maiwald GmbH

(57) **Abstract**

The disclosure relates to a component (100) for a vehicle chassis (300). The component (100) comprises a first connection portion (1) for pivotably supporting the component (100) on a vehicle structure or on another chassis component. The component (100) further comprises a second connection portion (3) for pivotably supporting the component (100) on a vehicle structure or on another chassis component, wherein the first connection portion (1) and the second connection portion (3) are arranged at opposite ends of the component (100). The component (100) further comprises a body portion (5) structurally interconnecting the first connection portion (1) and the second connection portion (3). A wheel bearing interface (7) for connecting a wheel bearing part (9) is provided on the body portion (5). Furthermore, the component (100) is conjointly formed by a first rigid part (11) and a second rigid part (13), the first rigid part (11) comprising a first material and being produced by a first manufacturing process and the second rigid part (13) comprising a second material and being produced by a second manufacturing process. Further, the first material is different from the second material and/or wherein the first manufacturing process differs from the second manufacturing process.

## Description

### TECHNICAL FIELD

The present disclosure relates to a component for a vehicle chassis.

The present disclosure further relates to a sub-assembly for a vehicle chassis comprising such a component.

The present disclosure further relates to a chassis for a vehicle, the chassis comprising such a component and/or such a sub-assembly.

The present disclosure further relates to a vehicle comprising such a component and/or such a sub-assembly and/or such a chassis.

The present disclosure also relates to a method for manufacturing such a component.

The present disclosure also relates to a use of a first rigid part and a second rigid part for forming such a component.

### BACKGROUND ART

In present vehicles, a multitude of mechanical supporting, propelling and steering components are often operatively interconnected and coupled to further vehicle parts, such as parts of a chassis of the vehicle. In the vehicle, such components are regularly provided in very constrained spaces, such as the chassis region. The components should accordingly properly fulfil their intended function, such as providing a sufficiently stable interconnection on the one hand. And on the other hand, the components must be suitably designed and arranged in the vehicle to ensure that they are operable in the tightly packed vehicle environment. In particular, the components should not undesirably interfere with other parts during operation of the vehicle. Accordingly, design and manufacturing of such vehicle components is often challenging and cost intensive.

### SUMMARY

It is therefore an objective of the present disclosure to provide an improved vehicle component that allows for a better design of the component, a simplified manufacturability and an increased flexibility in the arrangement in the vehicle.

The problem is at least partially solved or alleviated by the subject matter of the independent claims of the present disclosure, wherein further preferred examples are incorporated in the dependent claims.

According to a first aspect, there is provided a component for a vehicle chassis. The component comprises a first connection portion for pivotably supporting the component on a vehicle structure or on another chassis component. The component further comprises a second connection portion for pivotably supporting the component on a vehicle structure or on another chassis component, wherein the first connection portion and the second connection portion are arranged at opposite ends of the component. The component further comprises a body portion structurally interconnecting the first connection portion and the second connection portion. Further, a wheel bearing interface for connecting a wheel bearing part is provided on the body portion. Furthermore, the component is conjointly formed by a first rigid part and a second rigid part, the first rigid part comprising a first material and being produced by a first manufacturing process and the second rigid part comprising a second material and being produced by a second manufacturing process. Further, the first material is different from the second material and/or the first manufacturing process differs from the second manufacturing process.

Thus, a component may be provided, which advantageously allows to combine individual characteristic properties for the respective first and second rigid parts of the component based on different materials and/or different manufacturing processes of the first and second rigid parts. This may allow for instance, dependent on the intended design and location of the component within the vehicle and/or its intended functional properties, to use a first material or first manufacturing process for the first rigid part and to use a different second material or different second manufacturing process for the second rigid part. Thus, using two rigid parts for forming the component offers an increased flexibility concerning the choice of materials and/or the choice of manufacturing processes such that for each of the first part and the second part the most suitable material may be used and the most suitable manufacturing process may be chosen. Furthermore, due to the fact that the component is conjointly formed by the first rigid part and the second rigid part, wherein the first part and the second part differ in terms of material and/or manufacturing process, the component may have a comparatively high mechanical stability and may be compact at the same time. Forming the component conjointly by the first rigid part and the second rigid part is also advantageous from a manufacturing perspective. This is due to the fact that producing the first part, producing the second part and joining the first part and the second part in order to form the component may be easier from a manufacturing perspective than integrally forming the link arm of a single material using a single manufacturing process.

A component in the sense of the present disclosure may include at least one element of a vehicle that provides a mechanical support for further vehicle components connected thereto. In one example, a component may be a knuckle configured for supporting a wheel, and may be for instance a steering knuckle.

Pivotably supporting the component at the first and second connection portions may include to enable a rotating or swiveling movement of the component around one or more axes with respect to the vehicle structure or another chassis component.

In one example, the first connection portion may comprise a first support opening extending along a first axis, wherein the first support opening may be configured for pivotably supporting the component. The first axis may be for instance an essentially vertical axis, when the component is employed in an operational condition in the vehicle. However, in some examples also different orientations of the axis may be provided, such as a horizontal axis or a differently oriented axis.

In one example, the second connection portion may comprise a second support opening extending along a second axis, wherein the second support opening may be configured for pivotably supporting the component. The second axis may be for instance different to the first axis, e.g. an essentially horizontal axis when the component is employed in an operational condition in the vehicle. However, in some examples also different orientations of the axis may be provided, such as a vertical axis or a differently oriented axis. In one example, the first and the second axes may extend in essentially the same direction.

In one example, the first connection portion or second connection portion may comprise an interface for mounting one or more components of a brake of a vehicle, which may include for instance a brake caliper.

In one example, the first connection portion or the second connection portion may comprise a protrusion or arm, which may form a pickup for pivotally mounting one or more components for steering a vehicle, which may include for instance a steering rod.

According to the present disclosure, an arrangement at opposite ends may not be construed only to an arrangement at the opposite outermost extensions of the component, but rather refers to portions of the component that are located at different positions along a certain direction.

A vehicle structure may include a body of the vehicle, which may include for instance a space for the motor, the passengers and/or storage. The vehicle structure may include a support frame and may be arranged on the chassis of the vehicle.

The first and second connection portions and the body portion may be separate portions structurally interconnected by suitable interconnecting means such as bolts, rivets, welds etc., or may be at least partially integrally formed with each other.

The wheel bearing interface may comprise any suitable shape to allow a connection with the respective wheel bearing part. For instance, in one example the wheel bearing interface may provide a circular recess into which a corresponding circular wheel bearing part may be at least partially inserted. In an example, the wheel bearing part may include a pivot bearing for pivotably supporting a rim upon which a wheel or tire of a vehicle may be supported.

A rigid part in the sense of the present disclosure may include one or more generally stiff elements, which may provide mechanically stable support for the components connected thereto. The rigid part may accordingly prevent an undesired flexible or intrinsic movement in particular during operation of the vehicle.

A conjointly formation of the component by the first rigid part and the second rigid part may be achieved by any suitable connecting means such as bolts, rivets, welds etc. In some examples, the conjointly formation does not exclude the provision of further elements to form the component.

The first and second material may differ in one or more material properties dependent on the respective material and/or the respective manufacturing process. This may include but is not delimited to mechanical properties, such as strength, elasticity, plasticity, hardness, ductility, brittleness, roughness, fatigue, creep etc.

In an example, the first rigid part may comprise a first material and/or may be manufactured by a first manufacturing process, which may be different to a second material and/or a second manufacturing process of the second rigid part, which may allow to create the first rigid part stiffer than the second rigid part. Thus, the first rigid part may be formed at least partially thinner compared to a rigid part that comprises the same material or manufacturing process as the second rigid part.

In some examples, the first rigid part and the second rigid part may be made of different materials and made by different manufacturing processes. For instance, the first rigid part may be manufactured by stamped steel or by a deformed steel sheet, while the second rigid part may be manufactured by casted aluminum.

In some examples, the first rigid part and the second rigid part may be made of the same material but from different manufacturing processes. For instance, the first rigid part may be manufactured by stamped aluminum or by a deformed aluminum sheet, while the second rigid part may be manufactured by casted aluminum.

In some examples, the first rigid part and the second rigid part may be made from the same manufacturing process but may be made from different materials. For instance, the first rigid part may be manufactured by casted steel and the second rigid part may be made from casted aluminum.

In one example, the component may be a front steering knuckle or a rear steering knuckle of the vehicle.

In an example, the first material is a metal material or a plastics material or a fiber-reinforced plastics material or a metal-reinforced plastics material and/or the second material is a metal material or a plastics material or a fiber-reinforced plastics material or a metal-reinforced plastics material.

Thus, a suitable material combination for the first rigid part and the second rigid part may be chosen dependent on the requirements of the component with respect to its intended use and possible space constraints. A metal material may include any suitable metal exhibiting the desired material properties. This may include but is not limited to iron, aluminum, steel, copper etc. and any arbitrary alloy thereof. Similarly, a plastics or polymer material may include any suitable plastics exhibiting the desired material properties. This may include but is not limited to Polyethylene, Polypropylene, Polyurethane Epoxy, Vinyl Ester, Polyester Thermosetting Plastic, Phenol Formaldehyde Resins etc. and any arbitrary mixtures thereof. Fiber reinforced plastics materials may include a composite material comprising a plastic or polymer matrix, which is reinforced with fibers. The polymer matrix may accordingly include any suitable plastic similar or different to the above-described exemplary plastic materials. The fibers may be at least partially integrated in the polymer matrix and may comprise or be made of for instance carbon, glass, aramid, basalt etc. and any arbitrary combinations thereof. Similarly, metal reinforced plastic materials may likewise include a composite material comprising a plastic or polymer matrix, which is reinforced with metal. The polymer matrix may accordingly include any suitable plastic which may be similar or different to the above-described exemplary plastic materials. The metal may be accordingly at least partially integrated in the polymer matrix and may comprise or be made of any suitable metals similar or different to the above-described exemplary metal materials.

In an example, the first manufacturing process comprises casting or forging or pressing or molding or extruding and/or the second manufacturing process comprises casting or forging or pressing or molding or extruding.

Thus, a suitable manufacturing process for each of the first rigid part and the second rigid part may be selected as desired. The molding process may include any suitable molding process employed in the field of manufacturing vehicle components, which may include but is not delimited to an injection molding or a resin transfer molding. The casting process may include any suitable casting process employed in the field of manufacturing vehicle components, which may be but is not delimited to a low pressure die casting (LPDC) or a high pressure die casting (HPDC). The pressing process may include any suitable pressing process employed in the field of manufacturing vehicle components, which may include but it is not delimited to sheet metal forming.

In an example, one of the first rigid part or the second rigid part may be manufactured by pressing a sheet metal and the other one of the first rigid part or the second rigid part may be manufactured by casting aluminum.

In an example, the first rigid part or the second rigid part is S-shaped.

This may provide a particularly advantageous shape of the respective part since further parts of the vehicle may be arranged at least partially in the arches of the S-shaped part. In other words, the arches of the S-shape may at least partially surround one or more other parts of a neighboring vehicle element. In a non-limiting example, one arch of the S-shape may surround at least partially a wheel or tire of a vehicle. An S-shape may include two curved sections wherein the curvatures have opposite orientations. The two curved sections may have the essentially same diameter or may have different diameters. Moreover, the two curved sections may have an angular extension, wherein the angular extensions of the two curved sections may be essentially the same or may be different.

In an example, the first rigid part may comprise a first abutment surface and the second rigid part may comprise a second abutment surface, wherein the first abutment surface and the second abutment surface may contact one another. Thus, a two-dimensional contact between the first rigid part and the second rigid part may be established, which may enhance the contact between the respective parts and accordingly may allow for an improved transfer of loads applied to at least one of the rigid parts.

In an example, at least a portion of the first rigid part or the second rigid part has a U-shaped cross-section or a round cross-section.

Thus, an improved bearing of loads applied to one or more of the rigid parts may be provided. In a cross-sectional view, the U-shaped part may comprise a base portion having two legs extending therefrom into the same direction. For instance, the legs may extend from the base portion at an extension angle of about 90°. However, the legs may also extend from the base portion at any arbitrary different angle, such as for instance in a range of 20° to 160°, 50° to 130° or 70° to 110°. The legs may extend at the same angle or at different angles. The legs may extend from the base portion in a straight manner but may also comprise further bends or curves. Also, the base portion may be straight or curved having a certain diameter. Furthermore, the extension and orientation of the above-described elements may vary along an extension direction of the first rigid part or second rigid part perpendicular to the cross-sectional U-shape, which may be a longitudinal extension direction of the first and/or second rigid parts.

In some examples, at least a portion of the first rigid part or the second rigid part may also comprise one or more small or almost point sized base portions, which may lead to an essentially V-shaped cross-section or an essentially W-shaped cross-section. Thus, similar to the above-described U-shape, one or more legs may extend accordingly from the respective one or more small or almost point sized base portions. In some examples only one leg may be provided extending from the base portion, which may accordingly lead to an L-shape. The before described properties described with respect to the legs of the U-shape may accordingly apply to the one or more legs of the respective V-, W- or L-shape.

A round cross section may include an essentially oval cross-section or an essentially circular cross section. The round cross section may be in the form of a fully closed round, oval or circle etc., thus creating a hollow at the first or second rigid part or may be in the form a partially open round, oval or circle. The extension of the round cross section, for instance a hollow, may vary along the longitudinal extension direction of the first and second rigid parts.

In an example, one of the first rigid part and the second rigid part is elongated and extends from the respective other one of the first rigid part and the second rigid part.

An elongation or elongated extension of the first rigid part or the second rigid part may be understood as an extension essentially in a first direction, which may also be referred to as a longitudinal direction. Accordingly, elongated first and second rigid parts may exhibit a smaller extension in one or more directions perpendicular to the longitudinal direction. The elongated configuration of the first rigid part and/or the second rigid part allows the first rigid part and/or the second rigid part to connect other components arranged at a distance in a space-saving manner.

In an example, the wheel bearing interface is conjointly formed by the first rigid part and the second rigid part.

Thus, both, the first and the second rigid part may be accordingly formed and arranged to form at least partially in combination the wheel bearing interface. For instance, one or more portions of the first rigid part and the second rigid part may form one or more regions of the wheel bearing interface adapted to connect to a wheel bearing part. As already noted above, a conjointly formation may be achieved by any suitable connecting means such as bolts, rivets, welds etc. In some examples, the conjointly formation does not exclude the provision of further elements to form the wheel bearing interface. Conjointly forming the wheel bearing interface by the first rigid part and the second rigid part allows to reliably transfer loads between the wheel bearing interface and both of the first rigid part and the second rigid part.

In an example, the wheel bearing interface comprises at least one connection feature for connecting the wheel bearing part to the component, and the first rigid part and the second rigid part are connectable via the connection feature.

Using the same connection feature for connecting the wheel bearing part to the component and for connecting the first rigid part and the second rigid part is efficient in several respects. First, this is a space-saving way to connect the first part and the second part while at the same time connecting the wheel bearing part to the component. Second, this renders an associated assembly process efficient since only one connection feature needs to be manipulated in order to the first part and the second part while at the same time connecting the wheel bearing part to the component. The connection feature may comprise one or more holes, e.g. through-holes, for receiving bolts or screws, which may extend at least partially through one or more of the first rigid part, the second rigid part and/or the wheel bearing part. The connection feature may accordingly comprise one or more threads to receive corresponding threads provided at the bolts or screws to be received. The first rigid part, the second rigid part and or the wheel bearing part may be formed and arranged such that the receiving holes at least partially correspond to each other in a connected condition, such that a connecting bolt can be arranged therethrough to connect the wheel bearing part to the wheel bearing interface.

According to a second aspect, there is provided a sub-assembly for a vehicle chassis comprising a component of the present disclosure and a wheel bearing part, wherein the wheel bearing part is connected to the wheel bearing interface such that one of the first rigid part and the second rigid part is at least partially arranged between the respective other one of the first rigid part and the second rigid part and the wheel bearing part.

Thus, one of the first rigid part and the second rigid part may be located or sandwiched at least partially between the respective other one of the first rigid part and the second rigid part and the wheel bearing part. An improved sub-assembly may be accordingly provided, which may allow to make use of advantageous mechanical properties of different materials for individual first and second parts of the component and/or the advantageous mechanical properties achieved by individual first and second manufacturing processes employed to manufacture the corresponding first and second rigid parts. Thus, the subassembly may be accordingly designed in a more compact manner.

In an example, a wheel bearing part may be connected to the wheel bearing interface such that the first rigid part is at least partially arranged between the second rigid part and the wheel bearing part. The first rigid part, the second rigid part and the wheel bearing part may be connected by one or more threaded bolts, which may extend through the one or more connection features of the wheel bearing interface along a direction perpendicular to a longitudinal extension direction of the component. Hence, the first rigid part may be clamped or sandwiched between the second rigid part and the wheel bearing part. In some examples, the first rigid part, the second rigid part and the wheel bearing part may be aligned along a common axis, which may extend perpendicular to a longitudinal extension axis of the first or second rigid parts.

In some examples, the first rigid part, the second rigid part and the wheel bearing part directly contact each other in a connected condition. In further examples, one or more further elements are provided between the respective first rigid part, the second rigid part and the wheel bearing part, thus preventing a direct contact between the respective parts in a connected condition.

According to a third aspect, there is provided a chassis for a vehicle, the chassis comprising at least one component of the present disclosure and/or a sub-assembly of the present disclosure.

Accordingly, an improved chassis may be provided which may allow to make use of advantageous mechanical properties of different materials for individual first and second parts of the component and/or the advantageous mechanical properties achieved by individual first and second manufacturing processes employed to manufacture the corresponding first and second rigid parts. Thus, the chassis may be accordingly designed in a more compact manner.

In an example, in an operational state of the chassis, the component of the present disclosure extends in a substantially upright direction.

An extension in a substantially upright direction may be understood as an extension in a substantially vertical direction. However, the upright direction may also be inclined with respect to the vertical direction, for instance with an inclination angle of up to 45°, preferably up to 20° and more preferably up to 10°.

According to a fourth aspect, there is provided a vehicle comprising a component of the present disclosure and/or a sub-assembly of the present disclosure and/or a chassis of the present disclosure.

Thus, an improved vehicle may be provided which may allow to utilize advantageous mechanical properties of different materials for individual first and second parts of the component and/or the advantageous mechanical properties achieved by individual first and second manufacturing processes employed to manufacture the corresponding first and second rigid parts. Thus, the vehicle or parts thereof may be accordingly designed in a more compact manner.

According to a fifth aspect, there is provided a method for manufacturing a component for a vehicle chassis. The component comprises a first connection portion for pivotably supporting the component on a vehicle structure or on another chassis component, a second connection portion for pivotably supporting the component on a vehicle structure or on another chassis component, and a body portion structurally interconnecting the first connection portion and the second connection portion. Further, a wheel bearing interface for connecting a wheel bearing part is provided on the body portion. The method comprises
- providing a first rigid part comprising a first material and being produced by a first manufacturing process,
- providing a second rigid part comprising a second material and being produced by a second manufacturing process, wherein the first material is different from the second material and/or wherein the first manufacturing process differs from the second manufacturing process, and
- structurally connecting the first rigid part and the second rigid part such that the first rigid part and the second rigid part conjointly form the component.

Consequently, an improved method for manufacturing a component for a vehicle chassis may be provided which may allow to take advantage of mechanical properties of different materials for individual first and second parts of the component and/or the advantageous mechanical properties achieved by individual first and second manufacturing processes employed to manufacture the corresponding first and second rigid parts. Thus, the component may be for instance manufactured in a more compact manner. Furthermore, manufacturing, storage and distribution of the single first and second rigid parts and the conjointly formed component may be flexibilized and adapted to the needs of the manufacturer.

In an example structurally connecting the first rigid part and the second rigid part comprises attaching a wheel bearing part to the wheel bearing interface.

Accordingly, an improved subassembly as described above may be provided.

In a sixth aspect, there is provided a use of a first rigid part comprising a first material and being produced by a first manufacturing process, and a second rigid part comprising a second material and being produced by a second manufacturing process, for forming a component for a vehicle chassis. The component comprises a first connection portion and a second connection portion, wherein each of the first connection portion and the second connection portion is configured for pivotably supporting the component on a vehicle structure or on another chassis component, and a wheel bearing interface for connecting a wheel bearing part. Furthermore, the first material is different from the second material and/or the first manufacturing process differs from the second manufacturing process.

Thus, an improved use of the first rigid part and the second may be provided which may allow to employ advantageous mechanical properties of different materials for individual first and second parts of the component and/or advantageous mechanical properties achieved by individual first and second manufacturing processes employed to manufacture the corresponding first and second rigid parts. The improved use may also facilitate manufacturing, storage and distribution of the single first and second rigid parts and the conjointly formed component.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows different views of an example of a component for a vehicle chassis according to the present disclosure;
- Figure 2: schematically shows different views of another example of a component for a vehicle chassis according to the present disclosure;
- Figure 3: schematically shows a cross-sectional view of an example of a sub-assembly according to the present disclosure;
- Figure 4: schematically shows an example of a vehicle according to the present disclosure;
- Figure 5: schematically shows a flowchart of an example of a method according to the present disclosure.

### DETAILED DESCRIPTION

The figures are merely schematic representations and serve only to illustrate examples of the disclosure. Identical or equivalent elements are in principle provided with the same reference signs. Further, as used herein, a hyphenated form of a reference sign refers to a specific embodiment of an element and the unhyphenated form of the reference numeral refers to the collective element. For example, a device "23-1" refers to an instance of a device class that can be collectively referred to as device "23" and each of which can be generically referred to as device "23".

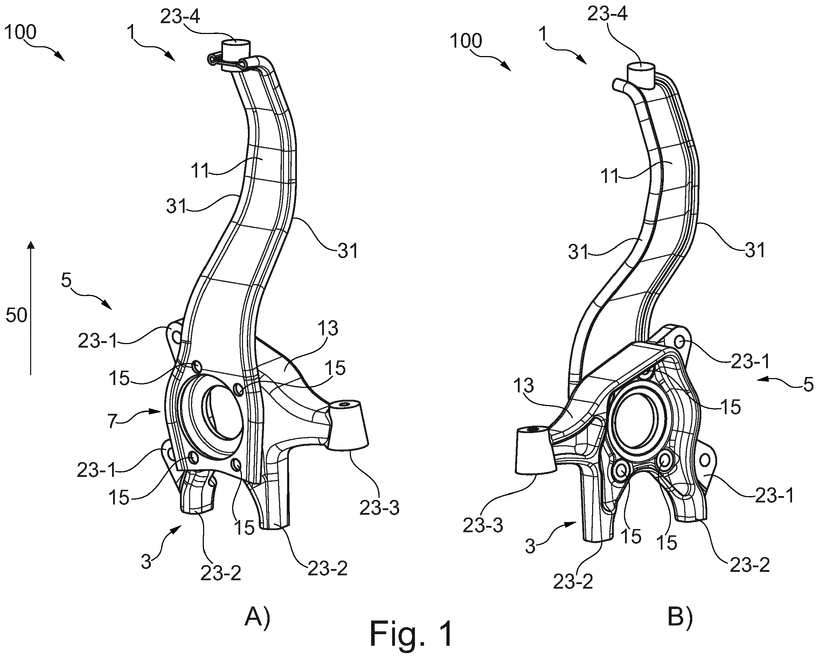

Figure 1 shows different views of an example of a component 100 for a vehicle chassis 300 (not depicted) according to the present disclosure.

The present example, sub-figure 1A) shows the component 100 in a perspective front view and sub-figure 1B) shows the component 100 in a perspective rear view. The component 100 comprises a first connection portion 1 arranged at an upper end of the component 100 and a second connection portion 3 arranged at an opposite lower end of the component 100.

The first connection portion 1 and the second connection portion 3 are each adapted to pivotably support the component 100 on a vehicle structure or on another chassis component at their respective ends.

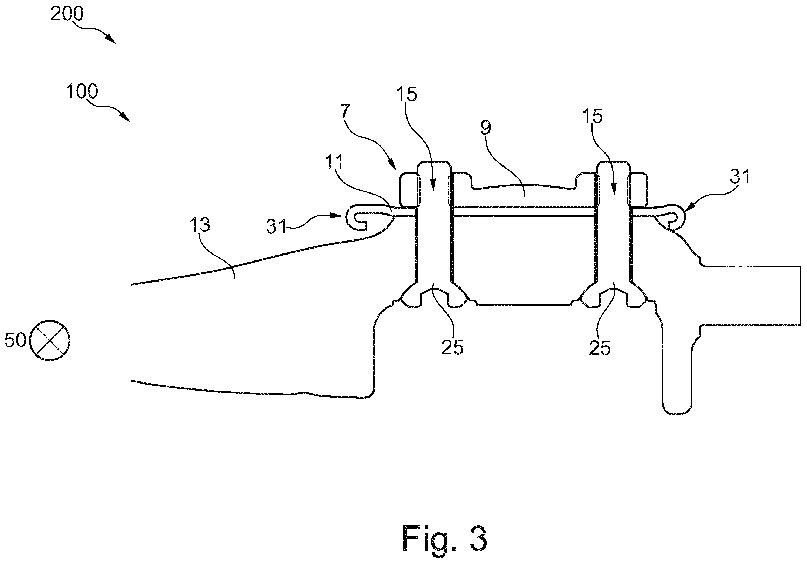

The component 100 depicted in figure 1 is a steering knuckle of a vehicle 400. Respective support interfaces 23 are accordingly provided at the first connection portion 1 and the second connection portion 3 at which a vehicle structure or another chassis component could be pivotably connected with the component 100. For instance, in the depicted example, two support interfaces 23-1 are provided to support one or more brake calipers of the vehicle 400, two support interfaces 23-2 are provided at the bottom portion of the second connection portion 3 to support a lower link arm or bracket of the vehicle 400, one support interface 23-3 is provided to support a tie rod end of a steering system of the vehicle 400, and one support interface 23-4 is provided at the top portion of the first connection portion 1 to support an upper control arm of the vehicle 400. However, in different examples, other vehicle parts may be connected to the component 100 at one or more support interfaces 23 arranged at similar or different locations. The component 100 further comprises a body portion 5 structurally interconnecting the first connection portion 1 and the second connection portion 3. Further, a wheel bearing interface 7 for connecting a wheel bearing part 9 (not depicted, cf. Fig. 3) is provided on the body portion 5. The wheel bearing interface 7 comprises four connection features 15 in form of through holes for connecting the wheel bearing part 9 to the component 100. However, the present disclosure is of course not limited thereto and may comprise any desired number of connection features such as one, two, three or five and more connection features 15, which may also be provided at different locations. As will be explained in greater detail below with respect to figure 3, the first rigid part 11 and the second rigid part 13 are accordingly connectable via the connection features 15.

In the example, the first rigid part 11 mainly extends along a longitudinal extension direction 50 and comprises lateral edges 31, which are flanged perpendicular to the longitudinal extension direction 50. Thus, a U-shape is achieved in a cross section perpendicular to the longitudinal extension direction 50 of the first rigid part 11 (cf. also Fig. 3). Furthermore, the first rigid part 11 has an S-shape in the longitudinal extension direction 50.

In the present example, the component 100 is conjointly formed by a first rigid part 11 and the second rigid part 13, wherein the first rigid part 11 is made of a pressed steel metal and the second rigid part 13 is made of casted aluminum. The pressed steel metal comprises a Young modulus that is three times higher compared to aluminum. Thus, the thickness of the first rigid part 11 can be reduced to one third compared to a similar part which should exhibit a similar stiffness but is made of casted aluminum as for the second rigid part 13. The provision of pressed steel metal allows to provide the first rigid part 11 with thinner cross sections, which accordingly enables a tighter packaging in a vehicle 400 with more design freedom for adjacent vehicle parts, such as the provision of large diameter springs, bigger wheels etc. Furthermore, a narrower trackwidth of the vehicle 400 may be achieved.

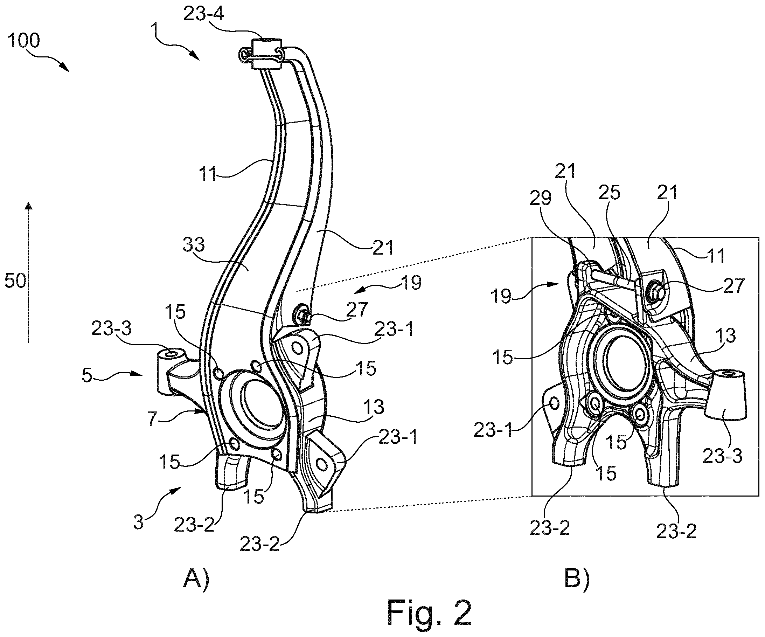

Figure 2 shows another example of a component for a vehicle chassis 300 according to the present disclosure.

In the present example, essentially the same elements as described above with respect to the example depicted in figure 1 are provided. Sub-figure A) shows the component 100 in a perspective front view and sub-figure 1B) shows an excerpt of the lower part of the component 100 in a perspective rear view. Contrary to the example shown in figure 1, the depicted component 100 of figure 2 further comprises a base portion 33 and two laterally extending sidewalls 21 at the opposite lateral edges 31 of the first rigid part 11, which protrude in a cross-sectional view perpendicular to the longitudinal extension direction 50 in an essentially perpendicular manner from the base portion 33. Thus, a U-shape of the first rigid part 11 is achieved. Further, an additional mounting element 19 is provided, which is in the depicted example formed by a threaded bolt 25 and nut 27 connection. The second rigid part 13 comprises interfaces in form of protrusions 29 comprising through holes. The bolt 25 extends perpendicular to the longitudinal extension direction 50 through the side walls 21 and the through holes of the protrusions 29 and is accordingly secured therein via the nut 27. At the opposite side, a corresponding nut 27 is provided to secure the bolt 25. Thus, the first rigid part 11 and the second rigid part 13 are connected to each other via the mounting element 19. In further examples, also more than one bolt 25 and respective one or more nuts 27 for arresting the additional bolt(s) 25 may be provided.

Figure 3 shows a cross sectional view of an example of a sub-assembly 200 according to the present disclosure in a direction perpendicular to the longitudinal extension direction 50.

In the present example, a wheel bearing part 9 is connected to the wheel bearing interface 7 such that the first rigid part 11 is arranged between the second rigid part 13 and the wheel bearing part 9. The lateral edges 31 of the first rigid part are flanged perpendicular to the longitudinal extension direction 50 of the first rigid part 11.

The first rigid part 11, the second rigid part 13 and the wheel bearing part 9 are connected by threaded bolts 25, which extend through the connection features 15 of the wheel bearing interface 7. In Figure 3, only two threaded bolts 25 are visible. The first rigid part 11 is accordingly clamped between the second rigid part 13 and the wheel bearing part 9.

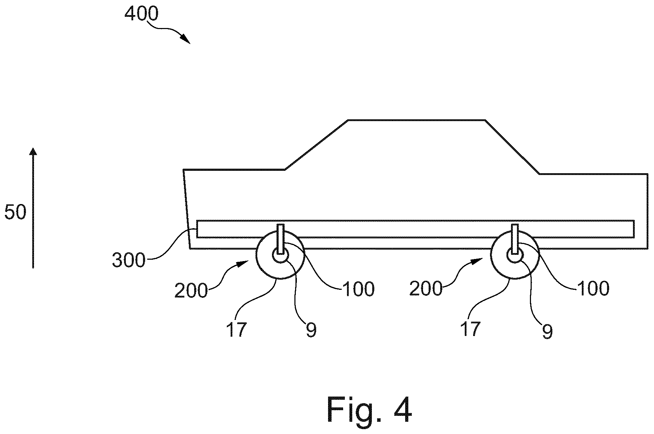

Figure 4 shows an example of a vehicle 400 according to the present disclosure.

In the example the vehicle 400 comprises a chassis 300, wherein the chassis 300 comprises a sub-assembly 200 including a component 100 and a wheel bearing part 9. In the depicted example, the component 100 forms a support element for the front and rear wheels 17 of the vehicle 400. In particular, the component 100 forms front and rear steering knuckles, which allow to hingedly connect a wheel or tire 17 to a chassis 300 of the vehicle 400.

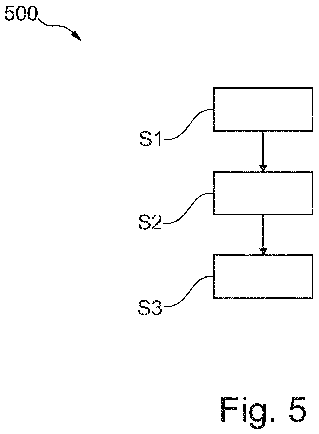

Figure 5 shows a flowchart of an example of a method 500 according to the present disclosure for manufacturing a component 100 for a vehicle chassis 300. The component 100, as described for instance above with respect to the examples of figures 1 to 4, comprises a first connection portion 1 for pivotably supporting the component 100 on a vehicle structure or on another chassis component, a second connection portion 3 for pivotably supporting the component 100 on a vehicle structure or on another chassis component, and a body portion 5 structurally interconnecting the first connection portion 1 and the second connection portion 3, wherein a wheel bearing interface 7 for connecting a wheel bearing part 9 is provided on the body portion 5. As depicted, the method 500 comprises a first step S1 of providing a first rigid part 11 comprising a first material and being produced by a first manufacturing process and a second step S2 of providing a second rigid part 13 comprising a second material and being produced by a second manufacturing process, wherein the first material is different from the second material and/or wherein the first manufacturing process differs from the second manufacturing process. The method 500 further comprises a third step S3 of structurally connecting the first rigid part 11 and the second rigid part 13 such that the first rigid part 11 and the second rigid part 13 conjointly form the component 100.

It is noted that the above-described order of the first step S 1 and the second step S2 could also be interchanged in some examples, i.e. that the second step S2 is initially performed and then the first step S 1 is performed. Also, the first step S 1 and the second step S2 could be performed simultaneously in some examples.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: first connection portion
- 3: second connection portion
- 5: body portion
- 7: wheel bearing interface
- 9: wheel bearing part
- 11: first rigid part
- 13: second rigid part
- 15: connecting feature
- 17: wheel
- 19: mounting element
- 21: side wall
- 23: support interface
- 25: bolt
- 27: nut
- 29: protrusion
- 31: lateral edge
- 33: base portion
- 50: longitudinal extension direction
- 100: component
- 200: sub assembly
- 300: chassis
- 400: vehicle
- 500: method

## Claims

1. A component (100) for a vehicle chassis (300), the component (100) comprising:
a first connection portion (1) for pivotably supporting the component (100) on a vehicle structure or on another chassis component,
a second connection portion (3) for pivotably supporting the component (100) on a vehicle structure or on another chassis component, wherein the first connection portion (1) and the second connection portion (3) are arranged at opposite ends of the component (100),
a body portion (5) structurally interconnecting the first connection portion (1) and the second connection portion (3),
wherein a wheel bearing interface (7) for connecting a wheel bearing part (9) is provided on the body portion (5),
wherein the component (100) is conjointly formed by a first rigid part (11) and a second rigid part (13), the first rigid part (11) comprising a first material and being produced by a first manufacturing process and the second rigid part (13) comprising a second material and being produced by a second manufacturing process, and
wherein the first material is different from the second material and/or wherein the first manufacturing process differs from the second manufacturing process.

2. The component (100) of claim 1, wherein the first material is a metal material or a plastics material or a fiber-reinforced plastics material or a metal-reinforced plastics material and/or wherein the second material is a metal material or a plastics material or a fiber-reinforced plastics material or a metal-reinforced plastics material.

3. The component (100) of claim 1 or 2, wherein the first manufacturing process comprises casting or forging or pressing or molding or extruding and/or wherein the second manufacturing process comprises casting or forging or pressing or molding or extruding.

4. The component (100) of any one of the preceding claims, wherein the first rigid part (11) or the second rigid part (13) is S-shaped.

5. The component (100) of any one of the preceding claims, wherein at least a portion of the first rigid part (11) or at least a portion of the second rigid part (13) has a U-shaped cross-section or a round cross-section.

6. The component (100) of any one of the preceding claims, wherein one of the first rigid part (11) and the second rigid part (13) is elongated and extends from the respective other one of the first rigid part (11) and the second rigid part (13).

7. The component (100) of any one of the preceding claims, wherein the wheel bearing interface (7) is conjointly formed by the first rigid part (11) and the second rigid part (13).

8. The component (100) of any one of the preceding claims, wherein the wheel bearing interface (7) comprises at least one connection feature (15) for connecting the wheel bearing part (9) to the component (100), and wherein the first rigid part (11) and the second rigid part (13) are connectable via the connection feature (15).

9. A sub-assembly (200) for a vehicle chassis (300) comprising a component (100) of any one of the preceding claims and a wheel bearing part (9), wherein the wheel bearing part (9) is connected to the wheel bearing interface (7) such that one of the first rigid part (11) and the second rigid part (13) is at least partially arranged between the respective other one of the first rigid part (11) and the second rigid part (13) and the wheel bearing part (9).

10. A chassis (300) for a vehicle (400), the chassis (300) comprising at least one component (100) of any one of claims 1 to 8 and/or a sub-assembly (200) of claim 9.

11. The chassis (300) of claim 10, wherein in an operational state of the chassis (300), the component (100) of any one of claims 1 to 8 extends in a substantially upright direction.

12. A vehicle (400) comprising a component (100) of any one of claims 1 to 8 and/or a sub-assembly (200) of claim 9 and/or a chassis (300) of claim 10 or 11.

13. A method (500) for manufacturing a component (100) for a vehicle chassis (300), wherein the component (100) comprises a first connection portion (1) for pivotably supporting the component (100) on a vehicle structure or on another chassis component, a second connection portion (3) for pivotably supporting the component (100) on a vehicle structure or on another chassis component, and a body portion (5) structurally interconnecting the first connection portion (1) and the second connection portion (3), wherein a wheel bearing interface (7) for connecting a wheel bearing part (9) is provided on the body portion (5), the method (500) comprising:
- providing (S1) a first rigid part (11) comprising a first material and being produced by a first manufacturing process,
- providing (S2) a second rigid part (13) comprising a second material and being produced by a second manufacturing process, wherein the first material is different from the second material and/or wherein the first manufacturing process differs from the second manufacturing process, and
- structurally connecting (S3) the first rigid part (11) and the second rigid part (13) such that the first rigid part (11) and the second rigid part (13) conjointly form the component (100).

14. The method of claim 13, wherein structurally connecting the first rigid part (11) and the second rigid part (13) comprises attaching a wheel bearing part (9) to the wheel bearing interface (7).

15. A use of a first rigid part (11) comprising a first material and being produced by a first manufacturing process, and a second rigid part (13) comprising a second material and being produced by a second manufacturing process, for forming a component (100) for a vehicle chassis (200),
wherein the component (100) comprises a first connection portion (1) and a second connection portion (3), wherein each of the first connection portion (1) and the second connection portion (3) is configured for pivotably supporting the component (100) on a vehicle structure or on another chassis component (100), and a wheel bearing interface (7) for connecting a wheel bearing part (9), and
wherein the first material is different from the second material and/or wherein the first manufacturing process differs from the second manufacturing process.
